# FASCICULE DE BREVET EUROPEEN

(11) **EP 0 400 711 B1**
(45) Date de publication et mention de la délivrance du brevet: **13.10.1993**
(21) Numéro de dépôt: 90201265.7
(22) Date de dépôt: 18.05.1990
(51) Int. Cl.: D06N 5/00, B32B 11/10, E04D 5/10

(54) **Membrane d'étanchéité bitumineuse**
Bitumöse Dichtungsbahn
Bituminous sealing membrane

(30) Priorité: 31.05.1989 BE 8900587
(43) Date de publication de la demande: 05.12.1990
(73) Titulaire: "PERFORMANCE ROOF SYSTEMS" en abrégé "P.R.S.", B-5920 Perwez (BE)
(72) Inventeur: Cogneau, Patrick, B-5880 Tourinnes-Saint-Lambert (BE)
(74) Mandataire: Callewaert, Jean

(56) Documents cités:
- DE-A- 1 945 923
- DE-A- 2 909 802
- FR-A- 1 352 159
- GB-A- 1 408 417

## Description

La présente invention se rapporte à une membrane d'étanchéité formée d'une masse bitumineuse et d'un ensemble formé d'une première nappe de fibres collée sur un côté d'une feuille de métal et d'une seconde nappe de fibres collée sur l'autre côté de la feuille de métal.

L'objet de l'invention trouve son application entre autre dans la technique de construction de toiture. Une telle membrane d'étanchéité est connue de la demande de brevet DE-A- 1945923. La membrane d'étanchéité connue est constituée d'une couche de bitume posée sur un ensemble constitué de nappes de fibres et d'une feuille de métal. Dans une forme de réalisation particulière la feuille de métal est recouverte des deux côtés d'une nappe de fibres. La feuille de métal est par exemple formée d'une feuille d'aluminium et la nappe de fibres d'une nappe de fibres de verre ou d'un non-tissé. La nappe de fibres et la feuille de métal adhèrent à la masse bitumineuse due aux propriétés adhésives de cette dernière.

Un inconvénient de la membrane d'étanchéité connue est que la feuille de métal et la nappe de fibres adhèrent l'une à l'autre à l'aide de la masse bitumineuse dans laquelle est trempée la nappe de fibres. Ceci pose en effet des problèmes d'adhérence. On a en effet constaté sur les membranes connues une délamination entre la feuille de métal et le bitume posé sur cette feuille de métal. Une analyse du problème a révélé que cette délamination est due au fait que la feuille de métal adhère mal au bitume. Cette délamination va alors détériorer la membrane et permettre des infiltrations ou causer d'autres dégâts.

L'invention a pour but de remédier à cet inconvénient.

A cette fin, une membrane d'étanchéité ayant les caractéristiques techniques mentionnées dans le préambule de la revendication 1 est suivant l'invention caractérisée en ce que les nappes sont collées sur la feuille de métal à l'aide d'une colle à base d'acrylate et que l'ensemble est noyé dans la masse bitumineuse.

La feuille de métal se trouve ainsi entre deux nappes de fibres qui dû au fait qu'elles sont collées à l'aide d'une colle à base d'acrylate sur la feuille de métal, adhèrent solidement à elles. La masse bitumineuse adhère quant à elle solidement aux nappes de fibres et non plus directement à la feuille de métal, ce qui résout le problème de délamination entre la feuille de métal et le bitume. On obtient ainsi une bonne adhérence entre les différentes couches de la membrane qui de ce fait améliore la qualité et la durée de vie de la membrane. La colle à base d'acrylate présente une bonne tenue aux différentes conditions auxquelles la membrane peut être soumise, notamment d'humidité et de température.

Il faut noter que l'usage d'une colle à base d'acrylate pour coller une feuille de métal sur une nappe de fibre est connu en soi de la demande de brevet DE-A-2909802. Ce document ne décrit toutefois pas une membrane d'étanchéité, ni ne possède un ensemble noyé dans la masse bitumineuse.

De préférence ladite colle contient un pourcentage d'acrylate compris entre 2 et 20 %. On obtient ainsi une colle qui a d'excellentes propriétés d'adhérence pour coller une nappe de fibres sur une feuille de métal, et qui de plus peut être fabriquée à un prix raisonnable.

Une forme de réalisation préférentielle d'une membrane d'étanchéité suivant l'invention est caractérisée en ce qu'au moins une dite nappe de fibres est formée d'une double couche comprenant une couche de non-tissé de fibres synthétiques organiques et une couche de voile de fibres de verre. Ceci améliore les propriétés mécaniques de la membrane.

De préférence le grammage du polyester dans ladite nappe de fibres supplémentaire est compris entre 30 et 40 g/m².

L'invention concerne également l'utilisation d'un ensemble dans une membrane d'étanchéité ayant les caractéristiques décrites ci-dessus.

D'autres particularités et avantages de l'invention apparaîtront de la description donnée ci-après d'un exemple de réalisation de l'invention. Cette description est donnée uniquement à titre d'exemple et ne limite pas la portée de la protection recherchée. Les références utilisées ci-après se rapportent aux dessins annexés.

La figure 1 représente une vue en coupe d'une membrane d'étanchéité suivant l'invention.

La figure 2 est une vue explosée de ladite membrane suivant la figure 1.

Dans les différentes figures, les mêmes références se rapportent à des éléments identiques ou analogues.

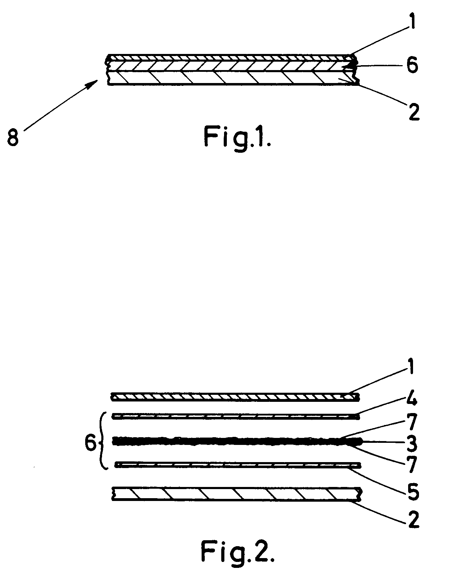

Une membrane d'étanchéité 8 suivant l'invention et illustrée sur la figure 1 comporte un ensemble 6 noyé dans une masse bitumineuse formée d'une première 1 et d'une deuxième couche 2 située de part et d'autre de l'ensemble.

De préférence, la première couche 1 est mince et la deuxième couche 2, inférieure, est plus épaisse afin d'assurer une bonne étanchéité par la membrane. Ledit ensemble comporte une feuille en métal 3 faisant office d'élément pare-feu au sein de l'ensemble. La feuille de métal permet d'éviter, lorsqu'un objet en feu tomberait sur la membrane, la propagation des flammes à travers la membrane et réduit ainsi les risques d'incendie. Le bitume est en effet connu comme bon combustible et il est donc nécessaire d'introduire dans la membrane une feuille de métal pour empêcher la propagation des flammes à travers la membrane.

On a constaté que la feuille de métal adhère mal au bitume et que des problèmes de délamination se posent lorsqu'il y a contact direct entre la feuille de métal et la couche bitumineuse. Ce problème de délamination amène un risque d'infiltrations d'eau entre les couches qui constituent la membrane. La stabilité et la durée de vie de la membrane se trouvent affectées par ce manque d'adhérence des diverses couches. Afin de remédier à ce problème de délamination, on colle, suivant l'invention, une nappe de fibres 4, 5 sur chaque face de ladite feuille de métal 3. La colle étendue sur la feuille de métal est représentée à la figure 2 par la référence 7.

Ces nappes de fibres sont collées à la feuille de métal de manière à former un ensemble 6 présentant une bonne adhérence des couches qui le composent. De plus ces nappes de fibres présentent l'avantage d'une bonne adhérence à la masse bitumineuse. La masse bitumineuse adhère ainsi solidement aux nappes de fibres qui elles adhèrent convenablement à la feuille de métal On résout ainsi le problème de délamination entre la couche de bitume et la feuille de métal.

La colle utilisée pour coller la feuille de métal aux nappes de fibres est une colle à base d'acrylate qui possède la propriété d'avoir une bonne tenue à l'humidité, au gel et à l'eau notamment à l'humidité due aux vapeurs d'eau qui pourrait s'introduire dans l'ensemble lors de la fabrication. De plus, elle assure une bonne adhésion même à des températures élevées, par exemple de l'ordre de 200°C, température à laquelle l'ensemble est sousmis lors de son immersion dans le mélange bitumineux. La colle à base d'acrylate garde également ses propriétés dans le temps.

De préférence, la colle contient un pourcentage d'acrylate compris entre 2 et 20. Déjà avec 2 % d'acrylate dans la colle on observe une bonne adhérence de la nappe de fibres à la feuille de métal.

Comme feuille de métal, on utilise, de préférence, de l'aluminium, ce qui grâce à son faible poids permet de maintenir le poids total de la membrane à un niveau raisonnable tout en présentant l'avantage d'un coût de matériau réduit. La feuille d'aluminium est de préférence constituée d'un aluminium brillant/mat d'une épaisseur de 7 microns.

Les nappes de fibres précitées sont constituées avantageusement d'une nappe de non-tissé de fibres synthétiques organiques, en particulier du polyester.

Il est particulièrement avantageux de prendre du polyester dont le grammage est compris entre 30 et 40 g/m². Il est également possible d'utiliser comme nappes de fibres des voiles de fibres de verre ou même de combiner les deux types de nappes susmentionnés de manière à obtenir ainsi un ensemble dans la membrane comportant des nappes de fibres elles-mêmes constituées de deux couches, notamment celles décrites ci-dessus.

La membrane est obtenue par exemple en imprégnant l'ensemble précité dans un mélange bitumineux maintenu entre 180° et 200°, le tout étant ensuite refroidi par des moyens connus.

La vue explosée d'un tronçon de la membrane d'étanchéité est visible sur la figure 2. Celle-ci illustre les différentes couches de la membrane.

## Revendications

1. Membrane d'étanchéité formée d'une masse bitumineuse et d'un ensemble (6) formé d'une première nappe de fibres (4) collée sur un côté d'une feuille (3) de métal et d'une seconde nappe de fibres (5) collée sur l'autre côté de la feuille de métal, caractérisée en ce que les nappes sont collées sur la feuille de métal à l'aide d'une colle à base d'acrylate et que l'ensemble est noyé dans la masse bitumineuse.

2. Membrane d'étanchéité suivant la revendication 1, caractérisée en ce que ladite colle contient un pourcentage d'acrylate compris entre 2 et 20 %.

3. Membrane d'étanchéité suivant la revendication 1 ou 2, caractérisée en ce que la première et deuxième nappe de fibres est formée d'une nappe de non-tissé de fibres synthétiques organiques.

4. Membrane d'étanchéité suivant l'une des revendications 1 ou 2, caractérisée en ce qu'au moins une dite nappe de fibres est formée d'une double couche comprenant une couche de non-tissé de fibres synthétiques organiques et une couche de voile de fibres de verre.

5. Membrane d'étanchéité suivant la revendication 3 ou 4, caractérisée en ce que la nappe de non-tissé de fibres synthétiques organiques est constituée de polyester.

6. Membrane d'étanchéité suivant la revendication 5, caractérisée en ce que le grammage du polyester dans ladite nappe de fibres supplémentaire est compris entre 30 et 40 g/m².

7. Membrane d'étanchéité suivant les revendications 1 à 6, caractérisée en ce que la feuille de métal est une feuille d'aluminium.

8. Utilisation d'un ensemble (6) dans une membrane d'étanchéité suivant l'une des revendications 1 à 7.

## Patentansprüche

1. Dichtungsbahn gebildet aus einer bitumösen Masse und einem Aufbau (6), der aus einer ersten, auf eine Seite einer Metallfolie (3) geklebten Faserschicht (4) und aus einer zweiten, auf die andere Seite der Metallfolie geklebten Faserschicht (5) gebildet ist,
dadurch gekennzeichnet, daß
die Schichten auf die Metallfolie mit Hilfe eines Klebstoffes auf Acrylatbasis geklebt sind, und daß der Aufbau in die bitumöse Masse eingelassen ist.

2. Dichtungsbahn nach Anspruch 1, dadurch gekennzeichnet, daß der Klebstoff einen prozentualen Gehalt an Acrylat zwischen 2 und 20 % enthält.

3. Dichtungsbahn nach Anspruch 1 oder 2, dadurch gekennzeichnet, daß die erste und zweite Faserschicht aus einer Faservliesschicht aus organischen, synthetischen Fasern gebildet ist.

4. Dichtungsbahn nach einem der Ansprüche 1 oder 2, dadurch gekennzeichnet, daß wenigstens eine der Faserschichten aus einer doppelten Decke gebildet ist, die eine Faservliesdecke aus organischen, synthetischen Fasern und eine Decke aus Glasfasern umfaßt.

5. Dichtungsbahn nach Anspruch 3 oder 4, dadurch gekennzeichnet, daß die Faservliesdecke aus organischen, synthetischen Fasern aus Polyester gebildet ist.

6. Dichtungsbahn nach Anspruch 5, dadurch gekennzeichnet, daß die Flächenmasse des Polyesters in der zusätzlichen Faserschicht zwischen 30 und 40 g/m² beträgt.

7. Dichtungsbahn nach einem der Ansprüche 1 bis 6, dadurch gekennzeichnet, daß die Metallfolie eine Aluminiumfolie ist.

8. Verwendung eines Aufbaus (6) in einer Dichtungsbahn gemäß einem der Ansprüche 1 bis 7.

## Claims

1. Sealing membrane made up of a bituminous mass and of a set (6) made up of a first web of fibres (4) which is adhesively bonded to one side of a sheet (3) of metal and of a second web of fibres (5) which is adhesively bonded to the other side of the sheet of metal, characterised in that the webs are adhesively bonded to the sheet of metal with the aid of an acrylate-based adhesive and that the set is embedded in the bituminous mass.

2. Sealing membrane according to Claim 1, characterised in that the said adhesive contains a percentage of acrylate of between 2 and 20 %.

3. Sealing membrane according to Claim 1 or 2, characterised in that the first and second web of fibres is made up of a web of nonwoven of organic synthetic fibres.

4. Sealing membrane according to either of Claims 1 and 2, characterised in that at least one said web of fibres is made up of a double layer comprising one layer of nonwoven of organic synthetic fibres and one layer of glass fibre fabric.

5. Sealing membrane according to Claim 3 or 4, characterised in that the web of nonwoven of organic synthetic fibres consists of polyester.

6. Sealing membrane according to Claim 5, characterised in that the weight per unit area of the polyester in the said additional web of fibres is between 30 and 40 g/m².

7. Sealing membrane according to Claims 1 to 6, characterised in that the sheet of metal is a sheet of aluminium.

8. Use of a set (6) in a sealing membrane according to one of Claims 1 to 7.
